# EUROPÄISCHE PATENTANMELDUNG

(11) **EP 2 319 625 A1**
(43) Veröffentlichungstag der Anmeldung: **11.05.2011**
(21) Anmeldenummer: 10014275.1
(22) Anmeldetag: 04.11.2010
(51) Int. Cl.: B02C 13/28, B02C 13/18

(54) **Wirbelstrommühle und Mahlwerkzeug dafür**

(30) Priorität: 05.11.2009 DE 102009053150
(71) Anmelder: MICROTEC GmbH, 86399 Bobingen (DE)
(72) Erfinder: Fischer, Josef, 86399 Bobingen (DE)
(74) Vertreter: Munk, Ludwig Hubert

(57) **Zusammenfassung**

Die Erfindung betrifft ein Mahlwerkzeug (10; 20) zur Verschraubung an einem Werkzeugträgerring eines von einer konischen oder zylindrischen Mahlbahn umschlossenen Rotors einer Wirbelstrommühle, mit einem Trägerkörper, über den das Mahlwerkzeug (10; 20) freiheitsgradlos an einem an dem Rotor vorgesehenen Werkzeugträgerring befestigbar ist, und mit einer im am Werkzeugträgerring befestigten Zustand in etwa in Rotordrehrichtung (R) weisenden, zum Zertrümmern auftreffender Teilchen dienenden Brechfläche (3; 23), welche an ihrer zur Mahlbahn hin gerichteten Seite in eine Brechkante (1) mündet, über welche eine Deckfläche (5; 25) an die Brechfläche (3; 23) anschließt, welche im am Werkzeugträgerring befestigten Zustand des Mahlwerkzeugs (10; 20) nach außen zur Mahlbahn hin weist, und mit dem Konuswinkel der Mahlbahn zur Rotorachse geneigt ist.

Die Erfindung zeichnet sich dadurch aus, dass das Mahlwerkzeug einzig aus dem Trägerkörper besteht, welcher wiederum aus einem einzigen harten und verschleißfestem Material besteht, insbesondere einer Vollkeramik, wie z.B. Siliziumcarbid oder Aluminiumoxid, einem Hartmetall oder einem hochvergüteten Stahl, wobei die Deckfläche (5; 25) und die Brechfläche (3; 23) als Seitenflächen des Trägerkörpers ausgebildet sind, welcher von der Brechfläche (3; 23), der Deckfläche (5; 25) und ergänzenden Oberflächen (6, 8, 9) in Form eines kompakten, monolithischen Blocks umgrenzt wird und bis auf eine Anzahl Bohrungen (4) für eine korrespondierende Anzahl Schrauben (11) zur Verschraubung am Werkzeugträgerring aus Vollmaterial besteht.

Die Erfindung betrifft ferner eine Wirbelstrommühle, welche eine Anzahl derartiger Mahlwerkzeuge (10; 20) aufweist.

## Beschreibung

Die Erfindung betrifft eine Wirbelstrommühle mit einem Stator und einem Rotor, wobei am Stator eine konische oder zylindrische Mahlbahn vorgesehen ist und am Rotor einer oder mehrere Werkzeugträgerringe, an dem bzw. an denen Mahlwerkzeuge angeschraubt sind, wobei die Mahlwerkzeuge und die Mahlbahn einen zylindrischen oder konischen Mahlspalt begrenzen, durch den der Pfad für ein an einer Grobgutaufgabe aufgebenes Mahlgut zu einer Feingutentnahme hin verläuft.

Die Mahlbahn weist dabei Rillen bzw. eine Riffelung auf, und die Mahlwerkzeuge in etwa in Drehrichtung des Rotors weisende Brechflächen. Die Rillen der Mahlbahn verlaufen dabei entlang des Mahlgutpfads, und bilden somit an ihren Flanken den Brechflächen der Mahlwerkzeuge gegenüberliegende Gegenbrechflächen. Die Wirbelstrommühle ist dabei üblicherweise mit stehender Achse angeordnet, um die Zentrifugal- und Gewichtskräfte zur Beschleunigung des an einer oberseitigen, zentral oberhalb des Rotors angebrachten Grobgutaufgabe aufgegebenen Mahlguts zu nutzen. Die Brechflächen sind dabei von Kanten begrenzt, wobei insbesondere die die Brechfläche in Radialrichtung nach außen hin, also zur Mahlbahn hin begrenzende Kante auftreffendes Mahlgut zerschneiden soll. Das Mahlgut wird jedoch hauptsächlich dadurch zerkleinert, dass es bei Aufprall auf eine der Brechflächen/Gegenbrechflächen zertrümmert und die daraus resultierenden Partikelteilchen zwischen den Brechflächen und Rillen bzw. Gegenbrechflächen in der Mahlbahn hin- und hergeschleudert werden, wobei das Mahlgut weiter zerkleinert wird.

Die Erfindung betrifft ferner ein Mahlwerkzeug für eine derartige Wirbelstrommühle gemäß dem Oberbegriff des Anspruchs 1.

Eine gattungsgemäße Wirbelstrommühle ist beispielsweise der europäischen

Patentschrift EP 0787528 B1 zu entnehmen. Wie allgemein üblich sind hier die Mahlwerkzeuge als winkelförmig gegossene oder gebogene Werkstücke ausgebildet, wobei der eine Schenkel des Winkels als Befestigungsflansch für eine Verschraubung an dem Werkzeugträgerring dient und der andere Schenkel des Winkels davon in etwa im 90°-Winkel absteht und eine in etwa in Rotordrehrichtung weisende Brechfläche trägt. Bei einer anderen bekannten Bauform ist das Mahlwerkzeug dagegen U-förmig und wird mit dem U-Grund am Werkzeugträgerring angeschraubt, so dass die beiden davon abstehenden Stege jeweils eine in Rotordrehrichtung weisende Brechfläche aufweisen.

Da auf derartigen Wirbelstrommühlen auch hochabrasive und harte Materialien gemahlen werden sind die Mahlwerkzeuge einem hohen Verschleiß ausgesetzt, insbesondere im Bereich der Brechfläche und ganz besonders in der Nähe der Brechkante. Daher wurden verschiedentliche Ansätze verfolgt, um die Mahlwerkzeuge verschleißfester zu machen.

Bei Versuchen, derartige Mahlwerkzeuge aus harten bzw. gehärteten Materialien herzustellen hat sich jedoch gezeigt, dass diese zu Sprödbruch neigen, so dass andere Lösungen gefunden werden mussten. Auch bei Beschichtungen aus Hartstoffen, welche in der Herstellung recht teuer sind, ist es immer wieder zu Materialabplatzungen gekommen, so dass auch Mahlwerkzeuge, welche derartige Hartstoffbeschichtungen aufweisen, keine zufriedenstellende Lösung bieten können. Gemäß einem weiteren Lösungsversuch, welcher beispielsweise der europäischen Offenlegungsschrift EP 1 413357 A1 zu entnehmen ist, wurden Verschleißplatten aus Hartmetall auf die in Rotordrehrichtung weisenden Winkelschenkel der Mahlwerkzeuge aufgeschraubt oder aufgelötet. Auch derartige Mahlwerkzeuge sind jedoch in der Herstellung relativ teuer, wobei auch diese Hartmetallplatten zu Sprödbruch neigten.

Weiterhin hat sich gezeigt, dass die Mahlwerkzeuge, ob unbeschichtet, beschichtet oder mit Brechplatten gepanzert häufig am Übergangsbereich des bzw. der Brechflächenschenkel zum Befestigungsschenkel bzw.

### Befestigungsgrund abreißen.

Ein anderer Ansatz wird gemäß der europäischen Patentanmeldung EP 2070596 verfolgt, wonach dem durch die am Rotor befestigten Mahlwerkzeuge und die Mahlbahn gebildeten Mahlwerk im Pfad des an einer Grobgutaufgabe aufgegebenen Mahlguts ein Grobgutzerkleinerungswerk strömungsmäßig vorgeschaltet ist. Damit lässt sich die Gefahr von Sprödbrüchen an den Mahlwerkzeugen verringern, weil insgesamt kleinere Mahlgutteilchen in den Mahlspalt zwischen der Mahlbahn und den Mahlwerkzeugen gelangen, so dass die Schläge beim Auftreffen des Mahlguts auf die Brechflächen kleiner sind. Auch diese Lösung macht die Herstellung der Wirbelstrommühle jedoch relativ teuer.

Ferner zeigt die EP 2052778 eine Wirbelstrommühle, bei der die Mahlwerkzeuge pendelnd am Rotor bzw. den Werkzeugträgerringen des Rotors aufgehängt sind, so dass bei Auftreffen besonders großer Mahlgutteilchen auf die Brechflächen die Mahlwerkzeuge "ausweichen" können. Hierbei muss jedoch wegen des verringerten Impulses durch das Ausweichen mit einem schlechteren Mahlgrad gerechnet werden. Abgesehen davon ist die pendelnde Aufhängung der Mahlwerkzeuge ebenfalls relativ aufwendig.

Schließlich zeigt die deutsche Patentschrift DE 100 53 946 C2 eine Mühle, bei der die insgesamt plattenförmigen Mahlwerkzeuge über einen schwalbenschwanzförmigen Ansatz in entsprechend geformte Nuten am Rotor der Mühle eingeschoben und dadurch am Rotor befestigt sind. Bei derartigen Mühlen neigen die schwalbenschwanzförmigen Nuten am Rotor jedoch dazu, im Mahleinsatz mit Mahlgut zuzusetzen, so dass sich die Mahlwerkzeuge gar nicht mehr oder zumindest nur mehr sehr schwer austauschen lassen.

Ausgehend vom gattungsmäßigen Stand der Technik liegt der vorliegenden Erfindung daher die Aufgabe zugrunde, ein schraubbefestigbares Mahlwerkzeug und eine mit solchen Mahlwerkzeugen ausgestattete Wirbelstrommühle zu schaffen, welche im Betrieb verschleißfest und wartungsarm ist und ferner kostengünstig hergestellt werden kann.

Diese Aufgabe wird bezüglich des Mahlwerkzeugs mit den Merkmalen des Anspruchs 1 gelöst, bezüglich der Wirbelstrommühle mit den Merkmalen des Anspruchs 10.

Das erfindungsgemäße Mahlwerkzeug besteht einzig aus einem Trägerkörper, über den das Mahlwerkzeug freiheitsgradlos an einem (oder zwischen zwei) an dem Rotor vorgesehenen Werkzeugträgerring anschraubbar ist. An dem Trägerkörper ist die im am Werkzeugträgerring befestigten Zustand des Mahlwerkzeugs in etwa in Rotordrehrichtung weisende Brechfläche ausgebildet. Mit "in etwa in Rotordrehrichtung weisend" sollen neben ebenen, in Rotordrehrichtung weisenden Flächen auch konkav oder konvex gekrümmte Brechflächen, sowie ebene Brechflächen, welche zur Rotordrehrichtung, also zur Umfangsrichtung des Rotors um einige Grad geneigt verlaufen, umfasst sein.

Das erfindungsgemäße Mahlwerkzeug zeichnet sich ferner dadurch aus, dass der Trägerkörper - und damit das Mahlwerkzeug insgesamt - aus einem einzigen, harten und verschleißfesten Material besteht, an dem auch die Brechfläche und eine über die Brechkante an die Brechfläche anschließende Deckfläche (welche also der Mahlbahn zugewandt ist) ausgebildet sind, wobei der Trägerkörper die Form eines kompakten, monolithischen Blocks bzw. Klotzes oder Rumpfs aufweist. Das Material des Trägerkörpers kann dabei beispielsweise ein Aluminiumoxid, ein Hartmetall, ein hochvergüteter Stahl oder ein Feinguss sein. Dabei besteht der Trägerkörper vollständig oder zumindest bis auf -üblicherweise in Axialrichtung des Rotors verlaufende - Bohrungen für Schrauben zur Verschraubung des Trägerkörpers am Werkzeugträgerring aus Vollmaterial. Mit "harten und verschleißfesten Material " ist dabei ein Material gemeint, welches gegenüber dem bei bisherigen Mahlwerkzeugen für das Mahlwerkzeug insgesamt oder zumindest als Trägermaterial eingesetzten Material härter und daher verschleißfester ist, beispielsweise gegenüber einem Normalstahl oder einem Standardguss (Grauguss etc.).

Die Blockform des Trägerkörpers bzw. des Mahlwerkzeugs insgesamt ist also eine Form, bei der die dem Werkzeugträgerring abgewandte Kante bzw. Seite der Brechfläche über eine auf der Oberfläche des Blocks liegende Fläche mit der der Brechfläche abgewandten Rückseite des Mahlwerkzeugs verbunden ist, die nicht wie bisher entlang einer abgewinkelten Linie verläuft, sondern entlang einer geraden oder bauchförmig gekrümmten Linie. Die Blockform des Mahlwerkzeugs ist also ferner eine Form, bei der sich die Deckfläche über eine gegenüber der Brechfläche überhaupt nennenswerte Ausdehnung erstreckt, wobei die Deckfläche also beispielsweise zumindest nicht wesentlich kleiner als die Brechfläche oder die Hälfte der Brechfläche oder dgl. ist.

Durch die Gestaltung des Mahlwerkzeugs als monolithischer Block ergibt sich nicht nur eine äußerst einfache Geometrie des Mahlwerkzeugs, welche sowohl im Gieß- als auch im Sinterverfahren auf einfache und kostengünstige Weise herstellbar ist, sondern überhaupt erst die Möglichkeit, dass Werkzeug insgesamt aus einem verschleißfestem Stoff, wie z.B. Feinguss, Hartmetall, Aluminiumoxid oder dergleichen zu vertretbaren Kosten mit möglichst wenigen, über das Urformen hinausgehenden Arbeitsschritten herzustellen.

Gegenüber den bisherigen Mahlwerkzeugen kann dabei aufgrund ausreichender Wandstärken die Sprödbruchneigung im Mahleinsatz wesentlich verringert werden. Denn es hat sich gezeigt, dass es bei gängigen winkel- oder U-förmigen Mahlwerkzeugen aufgrund der durch das auftreffende Mahlgut ausgelösten, hohen Zahl von Schlägen zu Schwingungen im relativ dünnwandigen Mahlwerkzeug kommt, wobei die höchstbelastete Stelle der Übergang vom Brechschenkel zum Befestigungsschenkel ist. Beim erfindungsgemäßen Mahlwerkzeug ist kein solcher, schwingungsbelasteter Übergang vorgesehen, sondern insgesamt eine ballige und daher dickwandige Form. Brüche aufgrund von Dauerwechselbelastungen scheiden daher als Versagensgrund aus, so dass sich zusammen mit den guter Verschleißfestigkeit insbesondere an der Brechfläche eine hohe Standzeit des erfindungsgemäßen Mahlwerkzeug ergibt. Dies ist besonders wichtig im Bereich des kryogenen Mahlens, welches häufig zum Zermahlen von Elastomeren, wie z.B. Gummifeinpulver für Teppichrücken, etc. eingesetzt wird, wobei mittels Flüssigstickstoff oder dergleichen Temperaturen im zweistelligen Minusbereich (ca. - 20° C bis - 100° C) eingestellt werden, um den zu zermahlenden Werkstoff zu verspröden, was jedoch gleichzeitig zu einer erhöhten Sprödbruchneigung an den Mahlwerkzeugen führt. Insbesondere bei als Verbundteile ausgebildeten Mahlwerkzeugen (aufgelötete Hartmetallplatte o.ä.) kommt es dabei aufgrund der starken Temperaturschwankungen (Das Abkühlen von Raumtemperatur auf Arbeitstemperatur erfolgt teilweise in einer Zeitspanne < 15 - 30 min) zu starken internen Spannungen, die häufig Risse und Brüche und damit letztlich ein Werkzeugversagen nach sich ziehen. Denn Werkstoffpaare wie z.B. Hartmetall und Normalstahl haben stark unterschiedliche Wärmeausdehnungskoeffizienten.

Mit den erfindungsgemäß balligen, kompakten und daher allseits dickwandigen Mahlwerkzeugen werden dabei ganz andere Standzeiten als mit bekannten Mahlwerkzeugen erreicht, wobei kostenschonend und nicht nur im Kryogenbereich standzeiterhöhend auch auf eine zusätzliche Hartbeschichtung verzichtet werden kann, weil das Mahlwerkzeug insgesamt aus einem harten Werkstoff herstellbar ist. Dies war mit bisherigen, dünnwandigen Werkzeuggeometrien nicht möglich, ohne dass es zu Sprödbruch kommt. Die bei schleißender Belastung häufig auftretenden Materialabplatzungen an Hartschichten können damit ebenso wie die hohen Fertigungskosten bei der Beschichtung umgangen werden.

Zwar weist das erfindungsgemäße Mahlwerkzeug gegenüber Mahlwerkzeugen, die lediglich aus einem Winkel bestehen anstatt aus einem diesen Winkel einhüllenden Vollmaterialblock ein wesentlich höheres Gewicht auf. Dies fällt jedoch nur recht wenig ins Gewicht, weil das Gewicht der einzelnen Mahlwerkzeuge bei gattungsgemäßen Wirbelstrommühlen gegenüber dem Gewicht der Werkzeugträgerringe klein ist.

Um dem Mahlwerkzeug die kompakte Blockform zu geben sollte die Deckfläche also zumindest nicht wesentlich kleiner als die Brechfläche sein. Die Brechfläche kann dabei eine ebene, leicht konvex oder konkav gekrümmte, der Mahlbahn zugewandte, also zur Rotorachse in den Konuswinkel der Mahlbahn geneigte Fläche sein. Bevorzugt ist eine Formgebung des Mahlwerkzeugs, bei der die Deckfläche die Außenkontur des Mahlwerkzeugs vollständig abdeckt, wenn man in Radialrichtung des Rotors von außen auf das montierte Mahlwerkzeug blickt. Denn dadurch können Teile des Rotors durch die Mahlwerkzeuge abgedeckt und so vor schleißenden Materialien im Mahlspalt zwischen dem Rotor und dem Stator, also der Mahlbahn geschützt werden.

In diesem Zusammenhang ist es auch besonders vorteilhaft, wenn die für eine zugeordnete Anzahl Schrauben zur Verschraubung des Mahlwerkzeugs am Werkzeugträgerring vorgesehene Anzahl Bohrungen als Stufenbohrungen ausgeführt sind, so dass die Schraubenköpfe der Anzahl Schrauben im am Werkzeugträgerring befestigten Zustand des Mahlwerkzeugs jeweils in der zugeordneten Bohrung versenkt und dadurch gegen schleißende Beanspruchung durch das Mahlgut geschützt sind.

Auch die Werkzeugträgerringe am Rotor werden über die Zeit einer starken, abrasiven Beanspruchung ausgesetzt, wobei ein Austausch eines Werkzeugträgerrings eine vollständige Zerlegung der Wirbelstrommühle erforderlich macht. Daher ist es besonders vorteilhaft, wenn das Mahlwerkzeug einen Aufbau hat, welcher zum Schutz des bzw. der Werkzeugträgerringe vor dem schleißenden Mahlgut beiträgt, wie dies durch die vorstehend angesprochene Überdeckung der Außenkontur des Mahlwerkzeugs durch die Deckfläche ansatzweise schon geschieht.

Eine weitere, in dieser Hinsicht vorteilhafte Weiterbildung der Erfindung betrifft dagegen eine das Mahlwerkzeug in Axialrichtung des Rotors begrenzende Anlagefläche, mit der das Mahlwerkzeug gegen den Werkzeugträgerring über die in die Bohrungen eingebrachten Schrauben spannbar ist, wobei die Bohrungen dazu selbstverständlich auch in Axialrichtung des Rotors verlaufen. Liegt diese Anlagefläche vom Mahlspalt aus gesehen hinter einer Stufe, weist der Trägerkörper also einen in Radialrichtung des Rotors vorspringenden Stufenabschnitt auf, über den die Deckfläche mit der Anlagefläche verbunden ist, so kann der Werkzeugträgerring zum Mahlspalt hin von dem Werkzeug abgedeckt und somit gegen verschleißende Einwirkung durch das Mahlgut geschützt werden.

Noch besser wäre es jedoch, wenn der Werkzeugträgerring nicht nur auf seiner zum Mahlspalt hin weisenden Seite und einer seiner beiden in Radialrichtung weisenden Seiten von dem Mahlwerkzeug abgedeckt wäre, sondern auf beiden in Radialrichtung des Rotors weisenden Seiten. Daher kann das Mahlwerkzeug in einer vorteilhaften Weiterbildung in seiner der Deckfläche gegenüberliegenden, dem Mahlspalt abgewandten Seite einen Schlitz aufweisen, mit dem es auf dem Werkzeugträgerring aufgesteckt werden kann, wobei der Trägerkörper des Mahlwerkzeugs dann wiederum von in Axialrichtung des Rotors verlaufenden Bohrungen durchdrungen sein kann, welche bevorzugt an ihren beiden Enden als Stufenbohrungen ausgeführt sind, so dass nicht nur die Schraubenköpfe, sondern am Gegenende der Schrauben auch die Kontermuttern gegen abrasiven Verschleiß durch das Mahlgut geschützt sind.

Da ein Mahlwerkzeug mit einem solchen Schlitz jedoch im Urformverfahren (Gießen oder Sintern) nur schwer herstellbar ist, ist es bevorzugt, einen aus zwei einzelnen Mahlwerkzeugen bestehenden Bausatz bereitzustellen, aus dem ein Gesamtmahlwerkzeug mit einem solchen Schlitz zusammengebaut werden kann, wobei das eine Mahlwerkzeug auf die eine Radialseite des Werkzeugträgerrings aufgesetzt werden kann und das andere Mahlwerkzeug auf die Gegenradialseite des Werkzeugträgerrings, wobei zumindest einer der beiden Blöcke eine hinter einer Stufe liegende Anlagefläche aufweisen muss, so dass sich insgesamt ein Mahlwerkzeug mit einem Schlitz in der der Deckfläche gegenüberliegenden, dem Mahlspalt abgewandten Fläche ergibt, wenn das Mahlwerkzeug am Werkzeugträgerring befestigt ist.

Eine weitere vorteilhafte Weiterbildung der Erfindung betrifft eine mit dem Mahlwerkzeug erzielbare, verbesserte Mahlwirkung, wenn die dem Mahlspalt zugewandte Deckfläche nicht eben ist, sondern Rillen aufweist, welche sich - entsprechend zu den Rillen in der gegenüberliegenden Mahlbahn- im Falle einer konischen Mahlbahn und entsprechender Deckfläche mit dem Konuswinkel der Mahlbahn zur Rotorachse hin geneigt, ansonsten parallel zur Rotorachse verlaufend - vorzugsweise über die gesamte Höhe der Deckfläche in Axialrichtung des Rotors erstrecken. Mit dieser Gestaltung wird der Trägerblock des Mahlwerkzeugs zu einem Träger für mehrere, in ihn integrierte Mahlwerkzeuge, weil an jeder der Rillen eine zusätzliche, in etwa in Rotordrehrichtung weisende Brechfläche ausgebildet ist, welche wiederum über eine vorzugsweise scharfe Brechkante an den zwischen den Rillen verbleibenden Segmenten der Deckfläche anschließen kann.

Auf diese Weise wird die Mahlwirkung des Mahlwerkzeugs um ein Vielfaches gesteigert, wobei der Widerstandsfähigkeit gegen den schleißenden Einfluss des Mahlguts jedoch zumindest dann kein Abbruch getan wird, wenn zwischen den Rillen ein genügend dickwandiges Material verbleibt, um Sprödbruch in diesem Bereich zu verhindern. In diesem Zusammenhang sei erwähnt, dass die Rillen und selbstverständlich auch die Brechfläche im eingebauten Zustand des Mahlwerkzeugs auch unter einem Winkel zu einer sich entlang der Deckfläche in Konusrichtung erstreckenden Geraden ausgebildet sein können, um das Mahlwerkzeug auf spezielle Mahlgüter einstellen zu können. Denn je nach Winkel der Brechflächen bzw. der Rillen der Mahlbahn wird das Mahlwerkzeug länger (wenn die Rillen bzw. die Brechflächen von der Grobgutaufgabe aus gesehen entgegen der Rotordrehrichtung geneigt sind) oder kürzer (wenn die Rillen bzw. die Brechflächen von der Grobgutaufgabe in Rotordrehrichtung geneigt sind) im Mahlspalt gehalten, so dass sich eine gröbere oder feinere Mahlung einstellt.

Insgesamt hat sich eine prismatische Form des Mahlwerkzeugs als besonders einfach in der Herstellung und zweckmäßig bei der Montage und für die Mahlwirkung erwiesen, wobei die Brechfläche die Grundfläche des Prisma bildet und vorzugsweise aus einer auf der gegenüberliegenden Seite der Brechfläche am Mahlwerkzeug vorgesehene, deckungsgleichen Gegenfläche, der Deckfläche, der Innenfläche, der Anlagefläche und weiteren, ergänzenden Flächen ein stehendes Prisma gebildet wird. Dabei sind die in der Deckfläche optional vorgesehenen Rillen und die Bohrungen für die Verschraubung am Werkzeugträgerring (oder ähnliche Befestigungseinrichtungen) von dem Prisma umschlossen bzw. eingehüllt. Hierbei ergibt sich der zusätzliche Vorteil, dass bei Wechsel der Rotordrehrichtung einfach die der Brechfläche gegenüberliegende Gegenfläche als Brechfläche genutzt werden kann, welche dazu vorteilhaft auch über eine scharfe Brechkante an die Deckfläche anschließt. Das Gleiche gilt in Bezug auf die deckflächenseitig vorgesehenen Rillen, deren andere Flanken dann als Zusatzbrechflächen wirken.

Eine mit dem vorgeschlagenen Mahlwerk bzw. den Mahlwerkzeugen gemäß der Erfindung ausgestattete Wirbelstrommühle weist einen hohen Widerstand gegen Verschleiß bei einer verbesserten Mahlwirkung und neben niedrigen Herstellungskosten auch aufgrund geringer Fehleranfälligkeit der Mahlwerkzeuge geringen Wartungskosten auf. Vorzugsweise ist die Mühle dabei mit stehender Rotorachse aufgebaut, konischer Mahlbahn und Mahlwerkzeuge, welche eine der Mahlbahn zugewandte, ebene, zur Rotorachse an den Konuswinkel geneigte Deckfläche aufweisen. Denkbar wären bei bestimmten Anwendungen auch Wirbelstrommühlen mit liegender Rotorachse.

Im Folgen wird anhand der beigefügten Figuren eine vorteilhafte Ausführungsform der Erfindung näher erläutert. Es zeigen:

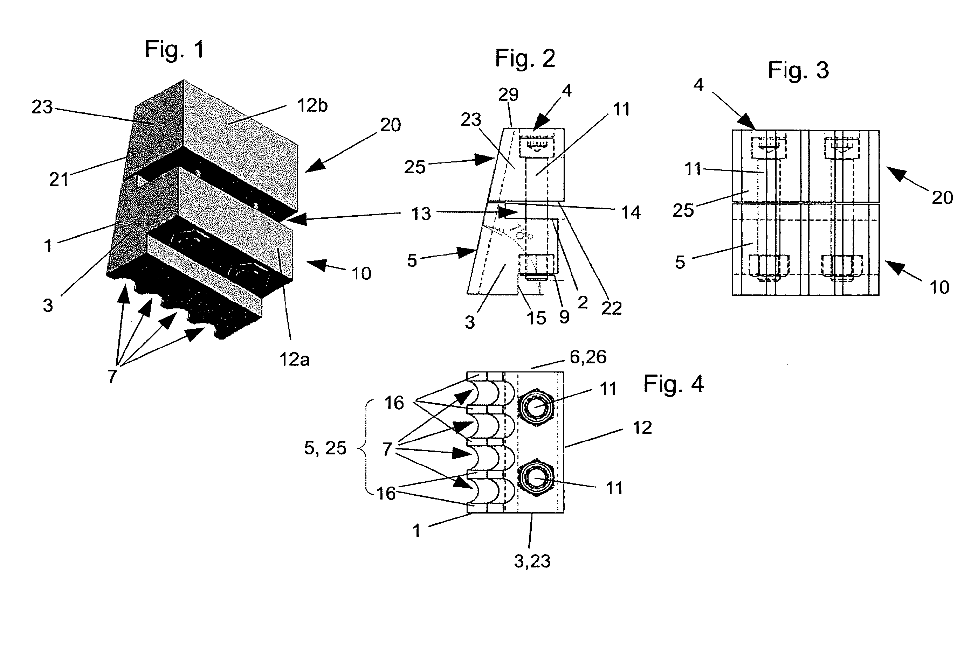

- Figur 1: eine perspektivische Ansicht eines aus einem Mahlwerkzeugsatz gebildeten Mahlwerkzeugs gemäß einer vorteilhaften Ausführungsform der Erfindung;
- Figur 2: eine Seitenansicht auf den Mahlwerkzeugsatz der Figur 1;
- Figur 3: eine Ansicht auf die Deckfläche des in den Figuren 1 und 2 gezeigten Mahlwerkzeugsatzes ohne eingezeichnete Rillen; und
- Figur 4: eine Draufsicht auf den in den vorhergehenden Figuren gezeigten Mahlwerkzeugsatz.

Den Figuren ist ein aus einem ersten Mahlwerkzeug 10 und einem zweiten Mahlwerkzeug 20 gebildeter Mahlwerkzeugsatz 10; 20 zu entnehmen, welcher im eingebauten, das heißt an einem Werkzeugträgerring eines Rotors einer Wirbelstrommühle verschraubten Zustand insgesamt ein Gesamtmahlwerkzeug 10; 20 bildet. Beide Mahlwerkzeuge 10; 20 bestehen aus einem monolithischen, kompakten Block aus einem einzigen, harten und verschleißfestem Material wie z.B. Aluminiumoxid, Hartmetall oder hochvergütetem Stahl oder Feinguß, welcher eine prismatische Grundform hat. Beide einstückigen Mahlwerkzeuge 10;20 weisen dabei prismatische Form auf, wobei eine in Rotordrehrichtung weisende Brechfläche 3 bzw. 23 die Grundfläche des Prismas bildet. Über diese Grundfläche ist das jeweilige Mahlwerkzeug 10; 20 über seine dem Mahlspalt zugewandte Deckfläche 5 bzw. 25, eine der Brechfläche 5 bzw. 25 gegenüberliegende Innenfläche 12a bzw. 12b, eine Anlagefläche 2 bzw. 22 und der Anlagefläche gegenüberliegende Flächen 9 bzw. 29 zu einem bis zu den den Deckflächen 3 bzw. 23 gegenüberliegenden Gegenflächen 6 bzw. 26 reichenden, monolithischen Prismablock aus einem einzigen Material aufgespannt.

Der Mahlwerkzeugsatz 10; 20 ist in einer seiner eingebauten Stellung entsprechenden Stellung gezeigt, in der die Flächen 5 bzw. 25, 3 bzw. 23, 12a bzw. 12b und 6 bzw. 26 miteinander fluchten.

Die dem Mahlspalt zugewandten Deckflächen 5; 25 weisen dabei jeweils Rillen 7 auf, welche sich entlang der sich konisch verjüngenden, dem Mahlspalt zugewandten Flanke des Mahlwerkzeugs 10 bzw. 20 erstrecken. Die Rillen 7 am ersten Mahlwerkzeug 10 und die Rillen 7 am zweiten Mahlwerkzeug 20 sind dabei ebenso wie in Axialrichtung des Rotors durch beide Mahlwerkzeuge 10; 20 hindurch verlaufende Stufenbohrungen 4 und überhaupt die Außenabmessungen der Mahlwerkzeuge 10; 20 insoweit deckungsgleich, dass sich bei übereinander gesetzten, am Werkzeugträgerring befestigten Mahlwerkzeugen 10;20 die sich in Axialrichtung des Rotors spitz zulaufenden Flanken der Rillen vom ersten Mahlwerkzeug 10 zum zweiten Mahlwerkzeug 20 hin fortsetzen, die Rillen 7 also insgesamt durchgehen.

Die Rillen 7 sind dabei in etwa halbzylinderförmig. Zwischen zwei der Rillen 7 bzw. zwischen der außenliegenden Rille 7 und der Brechkante 1 sind dabei jeweils ebene Deckflächensegemente 16 vorhanden, die so breit sind und sich ohne Sprünge entlang der runden Rillenflanken verbreitern, dass auch hier keine Sprödbrüche zu befürchten sind. Die Rillen 7 und die ebenen Deckflächensegemente 16 bilden die Deckfläche 5 bzw. 25.

Die Mahlwerkzeuge 10; 20 können dabei mit Inbusschrauben 11 am Werkzeugträgerring verschraubt werden, welche mit ihren Schraubenköpfen und ihren Kontermuttern in den Stufenbohrungen 4 versenkt sind.

Die beiden Mahlwerkzeuge 10; 20 schließen dabei einen von ihren Innenseiten 12a; 12b ausgehenden, nach außen hin ins Material hineinragenden Schlitz 13 ein, und decken somit im am Werkzeugträger befestigten Zustand den in diesem Schlitz 13 befindlichen Werkzeugträger vollständig ab.

Abwandlungen und Modifikationen der dargestellten Ausführungsform sind möglich, ohne den Rahmen der Erfindung zu verlassen.

So hat sich die dargestellte, prismatische Grundform für das Werkzeug zwar als günstig erwiesen. Da es für die Mahlwirkung aber hauptsächlich auf die Brechfläche(n) und die diese Brechfläche(n) von der Deckfläche(n) bzw. den Deckflächensegmenten 16 zwischen den Rillen trennenden Brechkanten ankommt, kann das Mahlwerkzeug an den Kanten zwischen seinen Innenflächen 12a bzw. 12b und den Anlageflächen 2 bzw. 22 und an den weiteren, dem Mahlgut abgewandten Kanten und Ecken auch abgerundet sein.

## Patentansprüche

1. Mahlwerkzeug (10; 20) zur Verschraubung an einem Werkzeugträgerring eines von einer konischen oder zylindrischen Mahlbahn umschlossenen Rotors einer Wirbelstrommühle, mit
einem Trägerkörper, über den das Mahlwerkzeug (10; 20) freiheitsgradlos an einem an dem Rotor vorgesehenen Werkzeugträgerring befestigbar ist, und mit einer im am Werkzeugträgerring befestigten Zustand in etwa in Rotordrehrichtung (R) weisenden, zum Zertrümmern auftreffender Teilchen dienenden Brechfläche (3; 23), welche an ihrer zur Mahlbahn hin gerichteten Seite in eine Brechkante (1; 21) mündet, über welche eine Deckfläche (5; 25) an die Brechfläche (3; 23) anschließt, welche im am Werkzeugträgerring befestigten Zustand des Mahlwerkzeugs (10; 20) nach außen zur Mahlbahn hin weist, und entsprechend dem Konuswinkel der Mahlbahn zur Rotorachse geneigt ist,
**dadurch gekennzeichnet, dass**
das Mahlwerkzeug (10; 20) einzig aus dem Trägerkörper besteht, welcher wiederum aus einem einzigen, harten und verschleißfestem Material besteht, insbesondere einer Vollkeramik, wie z.B. Siliziumcarbid oder Aluminiumoxid, einem Hartmetall oder einem hochvergüteten Stahl, wobei die Deckfläche (5; 25) und die Brechfläche (3; 23) als Seitenflächen des Trägerkörpers ausgebildet sind, welcher von der Brechfläche (3; 23), der Deckfläche (5; 25) und ergänzenden Oberflächen (2, 6, 9, 12a; 22, 26, 29, 12b) in Form eines kompakten, monolithischen Blocks umgrenzt ist und bis auf eine Anzahl Bohrungen (4) für eine korrespondierende Anzahl Schrauben (11) zur Verschraubung am Werkzeugträgerring aus Vollmaterial besteht.

2. Mahlwerkzeug (10; 20) nach Anspruch 1, **dadurch gekennzeichnet, dass** wobei die Deckfläche (5; 25) zumindest nicht wesentlich kleiner als die Brechfläche (3; 23) ist, und wobei die Deckfläche (5; 25) in Radialrichtung des Rotors gesehen die Außenkontur des Mahlwerkzeugs (10; 20) bevorzugt vollständig abdeckt.

3. Mahlwerkzeug (10, 20) nach Anspruch 1 oder 2, **dadurch gekennzeichnet, dass** die Anzahl Bohrungen (4) jeweils als Stufenbohrungen ausgebildet sind, so dass die Schraubenköpfe und/oder Kontermuttern der Anzahl Schrauben (11) jeweils in der zugeordneten Bohrung versenkt sind.

4. Mahlwerkzeug (10) nach Anspruch 3, **dadurch gekennzeichnet, dass** die Anzahl Bohrungen (4) den Trägerkörper im am Werkzeugträgerring befestigten Zustand in Axialrichtung durchdringen und der Trägerkörper eine in Axialrichtung des Rotors weisende Anlagefläche (2) aufweist, mit der er gegen den Werkzeugträgerring spannbar ist, und eine in die andere Axialrichtung des Rotors weisende Gegenfläche (9), von der die Anzahl Stufenbohrungen mit einer Stufe ausgehend den Trägerkörper durchdringen, wobei die Gegenfläche (9) vom Mahlspalt aus gesehen hinter einer Stufe (15) liegt.

5. Mahlwerkzeug (10; 20) nach einem der vorhergehenden Ansprüche, **dadurch gekennzeichnet, dass** die Anzahl Bohrungen (4) den Trägerkörper im am Werkzeugträgerring befestigten Zustand in Axialrichtung durchdringen und der Trägerkörper eine in Axialrichtung des Rotors weisende Anlagefläche (2; 22) aufweist, mit der er gegen den Werkzeugträgerring spannbar ist, wobei die Anlagefläche (2) vom Mahlspalt aus gesehen insbesondere hinter einer Stufe (14) liegt.

6. Mahlwerkzeug nach einem der Ansprüche 1 bis 4, **dadurch gekennzeichnet, dass** die Anzahl Bohrungen den Trägerkörper im am Werkzeugträgerring befestigten Zustand in Axialrichtung durchdringen und der Trägerkörper eine Schlitz in der der Deckfläche gegenüberliegenden Innenfläche aufweisen.

7. Mahlwerkzeugsatz (10, 20), bestehend aus zwei Mahlwerkzeugen (10; 20) nach einem der Ansprüche 1 bis 4, **dadurch gekennzeichnet, dass** die beiden Mahlwerkzeuge (10; 20) jeweils von der Anzahl Bohrungen (4) in Axialrichtung durchdrungen sind, wobei zumindest eines der Mahlwerkzeuge (10) die vom Mahlspalt aus gesehen hinter einer Stufe liegende Anlagefläche (2) aufweist, wobei die beiden Mahlwerkzeuge abmessungsmäßig so aufeinander abgestimmt sind, dass sie zusammen ein zweiteiliges Gesamtmahlwerkzeug (10, 20) bilden, welches wie das monolithische Mahlwerkzeug nach Anspruch 6 die das Gesamtmahlwerkzeug (10, 20) im am Werkzeugträgerring befestigten Zustand in Axialrichtung durchdringende Anzahl Bohrungen (4) und den Schlitz (13) in der der Deckfläche (5; 25) gegenüberliegenden Innenfläche (12) aufweist.

8. Mahlwerkzeug (10; 20) bzw. Mahlwerkzeugsatz (10, 20) nach einem der vorhergehenden Ansprüche, **dadurch gekennzeichnet, dass** die Deckfläche (5; 25) Rillen (7) aufweist, welche sich mit dem Konuswinkel der Mahlbahn, insbesondere um 8° - 16° zur Rotorachse geneigt vorzugsweise über die gesamte Höhe der Deckfläche (5; 25) erstrecken.

9. Mahlwerkzeug (10; 20) bzw. Mahlwerkzeugsatz (10, 20) nach einem der vorhergehenden Ansprüche, **dadurch gekennzeichnet, dass** der Trägerkörper zumindest bis auf die Bohrungen (4) und/oder die Rillen (7) ein seine Oberfläche einschließendes, über der Brechfläche (3; 23) als Prismagrundfläche aufgespanntes, gedachtes Prisma zumindest weitgehend, beispielsweise zu mindestens 80%, insbesondere zu mindestens 90%, bevorzugt vollständig ausfüllt.

10. Wirbelstrommühle mit einem Stator und einem Rotor, wobei der Stator eine Mahlbahn mit einer gerillten, konischen oder zylindrischen Innenoberfläche aufweist, und der Rotor an einer Anzahl Werkzeugträgerringe verschraubte, eine bei Drehbewegung des Rotors konische oder zylindrische Bahn abstreifende Mahlwerkzeuge aufweist, wobei die Mahlbahn und die Mahlwerkzeuge einen Mahlspalt begrenzen, und wobei die Mahlwerkzeuge in etwa in Rotordrehrichtung weisende Brechflächen haben und die Rillen der Mahlbahn den Brechflächen gegenüber liegende Gegenbrechflächen, **dadurch gekennzeichnet, dass** als Mahlwerkzeuge eine Anzahl Mahlwerkzeuge (10; 20) und/oder Mahlwerkzeugsätze (10, 20) nach einem der vorhergehenden Ansprüche vorgesehen sind.
